# EUROPEAN PATENT SPECIFICATION

(11) **EP 0 383 145 B1**
(45) Date of publication and mention of the grant of the patent: **05.07.1995**
(21) Application number: 90102266.5
(22) Date of filing: 06.02.1990
(51) Int. Cl.: G11B 5/53, G11B 5/52

(54) **Apparatus for recording and reproducing signals**
Gerät zum Aufzeichnen und Wiedergeben von Signalen
Dispositif d'enregistrement et de reproduction de signaux

(30) Priority: 14.02.1989 JP 33989/89
(43) Date of publication of application: 22.08.1990
(73) Proprietor: MATSUSHITA ELECTRIC INDUSTRIAL CO., LTD., Kadoma-shi, Osaka-fu, 571 (JP)
(72) Inventor: Sekimoto, Kunio, Katano-shi, Osaka-fu (JP)
(74) Representative: Eisenführ, Speiser & Partner

(56) References cited:
- FR-A- 2 382 143

## Description

### BACKGROUND OF THE INVENTION

The present invention generally relates to an apparatus for recording and reproducing signals, which is adapted to record, reproduce the signals such as video signals, audio signals, etc. of a VTR (Video Tape Recorder) and so on.

Generally, in the recent years, in the video/audio signal recording/reproducing apparatuses such as VTR and so on, the picture quality and the sound quality are improved, with the recording being changed from the conventional analog recording to the digital recording. In the digital recording, the information amount of the signals to be recorded is more as compared with the analog recording. It is considered to be difficult to realize an apparatus which is lighter in weight, smaller in size, and is capable of long hours' recording/reproducing operations.

A narrower track is considered appropriate for realizing an apparatus having such features. As the digital recording is different from the analog recording, the S/N does not depend upon the track width. One factor for determining the track width depends upon whether or not the error rate necessary for complete correction by the error correction can be sufficiently obtained. In terms of this point view,
the digital recording may be considerably narrowed in the track width as compared with the analog recording. The factor for determining the track width is the accuracy at the editing operation (insertion editing operation and so on) time. Partial track may be cut, reduced, because the complete continuity cannot be effected in the editing points due to the difference in the linearity between the machines by the interchangeable reproduction or due to the tracking errors. Even at this time, it is necessary to obtain the sufficient error rate.

There is known a D - 2 composite digital VTR (The Journal of the Institute of Television Engineers of Japan, Vol. 42, No. 5, 1988, P. 498 - P. 502) for broadcasting recently introduced. In the conventional apparatus, the recording track of 39 »m in width is, without the provision of a guard band, formed by two heads of mutually different azimuth angles, so that the output may not be reduced even when the track shift has been caused by the interchangeability and so on through the reproducing operation with the head greater in width than the recording track. In the editing operation, signals are written above the other on the already recorded track, with the erasing head being not provided (overwriting).

Here, the track cutting and the interference in the editing point in a case where the editing operation is effected by the overwriting in the conventional apparatus will be taken into consideration.

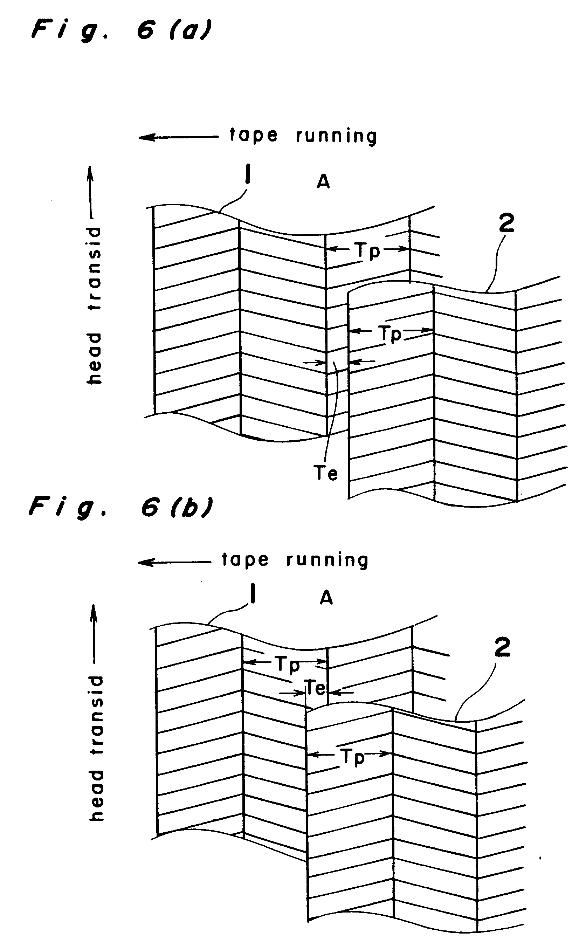

Fig. 6 shows a condition where the track 2 is overwritten on the already recorded track 1 from the point A. Also, what are shown with oblique lines in the tracks 1, 2 show the azimuth angles of the respective heads. Fig. 6 (a) shows a condition where the overwriting head is shifted to the right by Te. Fig. 6 (b) shows a condition where it is shifted to the left by Te. It is to be noted that the track pitch is Tp.

In the case of Fig. 6 (a), the signal components of the Tp width are reproduced in the editing point through the reproduction by the wider heads, but the signal from the track of the Te width is mixed as the interference signal of the azimuth which is the same as that of the track immediately after the editing point A. The signal of the same azimuth is not attenuated, thus giving interferences to the normal signal. The signal from the original track Tp is equivalently reduced by this interference. Now assume that the reduction portion by the interference of the track portion Te is kTe (1 < k ≦ 2). If the recorded signal is of a sine wave, k equals 1. As the recorded signal contains the components of a wide frequency range from the low frequency to the high frequency, k becomes 1 or larger and becomes between 1 and approximately 2.

The equivalent effective track width Ts1 at this time becomes as follows:$\text{Ts1 = Tp - kTe}$

In Fig. 6 (b), the already recorded track immediately before the editing point is cut by Te. Accordingly, the effective width Ts2 of the track becomes as follows:$\text{Ts2 = Tp - Te}$

Assume that the effective track width is Ts, Ts2 becomes greater than Ts1 from equations (1), (2).$\text{Ts = Ts1}$
The Te for satisfying the equation (3) becomes the tolerance track shift amount. From equations (1), (3),$\text{Te = ( Tp - Ts ) / k}$

In the conventional apparatus, the track shift amount at the editing point becomes an interference. It is necessary to widen the normal track width more than necessary with respect to the track shift at the editing point. This fact results in the shortening of the recording time per area unit of the tape and, thus, in a larger size of the cassette containing the tape and also an increase of the running costs. Thus, it is desirable to have a record format wherein the track pitch itself is made as small as possible, and the tolerance value of the track shift at the editing time with respect to the track pitch is made as large as possible.

### SUMMARY OF THE INVENTION

Accordingly, an object of the present invention is to provide a signal recording/reproducing apparatus for recording/reproducing the signals in a recording format wherein the track pitch itself is made as small as possible, and the tolerance value of the track shift at the editing time with respect to the track pitch is made as large as possible in order to obtain the desired stability at the editing point.

In accomplishing this object, according the present invention, there is provided an apparatus for recording signals through forming oblique tracks on a recording medium with at least one rotating set of a plurality of simultaneously scanning recording heads which each are adapted to have different azimuth angles among the adjacent tracks formed by each of the heads of said set, the heads of the set being arranged such that guard bands are not formed among the respective tracks formed by the recording heads of said set, characterized by erasing means for providing guard bands in editing points between a set of tracks to be recorded newly by the set of recording heads and an already recorded set of tracks.

Advantageous embodiments are defined in the subclaims.

The recording operation is effected without the provision of the guard bands among the individual tracks to be recorded by the recording heads which do not include a joint at the editing operation through the provision of the above-described features of the invention. The recording operation is effected through the provision of the guard bands between the already recorded tracks which include a joint at the editing operation, and the newly recorded tracks . Also, at the editing time, by the erasure of an external portion from the recording set track width, the influences by the rest of the same azimuth signals through the track shifts are reduced, the difference between the track width in the normal reproduction and the effective track width in the editing point is reduced as much as possible so as to realize the stabilization of the edition and the narrowing operation of the tracks. Also, by the reproduction by the wider head, all the effective signals may be picked up even with track shifts.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a recording pattern view showing one embodiment of the recording pattern on the tape in accordance with the present invention;
Fig. 2 is a construction view showing one embodiment of the head arrangement on the rotary cylinder in accordance with the present invention;
Fig. 3 is a track pattern view showing the connection of the tracks in the editing point in accordance with the present invention;
Fig. 4 is the characteristic graph showing the relation between the tolerance track shifts and the respective parameters in the present invention;
Fig. 5 is a block diagram showing the whole apparatus for embodying the present invention; and
Fig. 6 is a track pattern view showing the connection of the tracks at the editing point in the conventional apparatus.

### DETAILED DESCRIPTION OF THE INVENTION

Before the description of the present invention proceeds, it is to be noted that like parts are designated by like reference numerals throughout the accompanying drawings.

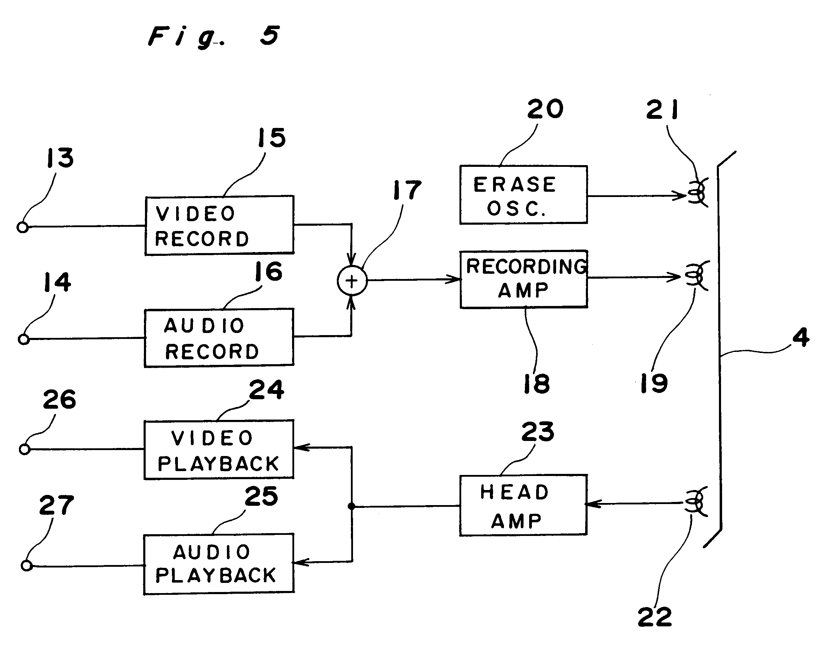

Referring now to the drawings, there is shown in Fig. 5 the processing in an apparatus for recording/reproducing the video signals and the audio signals according to one preferred embodiment of the present invention, wherein the signals inputted into video and audio input terminals 13, 14 are respectively processed for recording by a video signal record processing circuit 15 and an audio signal record processing circuit 16, are added by an adder 17, thereafter are amplified by a recording amplifier 18, and are recorded on the tape 4 by recording heads 19 (A0, A1, A0′, A1′). The signals reproduced by reproducing heads 22 (B0, B1, B0′, B1′) at the reproducing time are amplified by a head amplifier 23, thereafter the reproduction is processed by a video signal reproduction processing circuit 24 and an audio signal reproduction processing circuit 25, and the signals are outputted from the output terminals 26, 27. At the editing time, the portions to be newly recorded in the already recorded portions are erased by erasing heads 21 (E, E′) by the output signals of the erasing signal oscillator 20 before the recording operation.

The signal recording/reproducing apparatus of the present invention will be described in detail hereinafter.

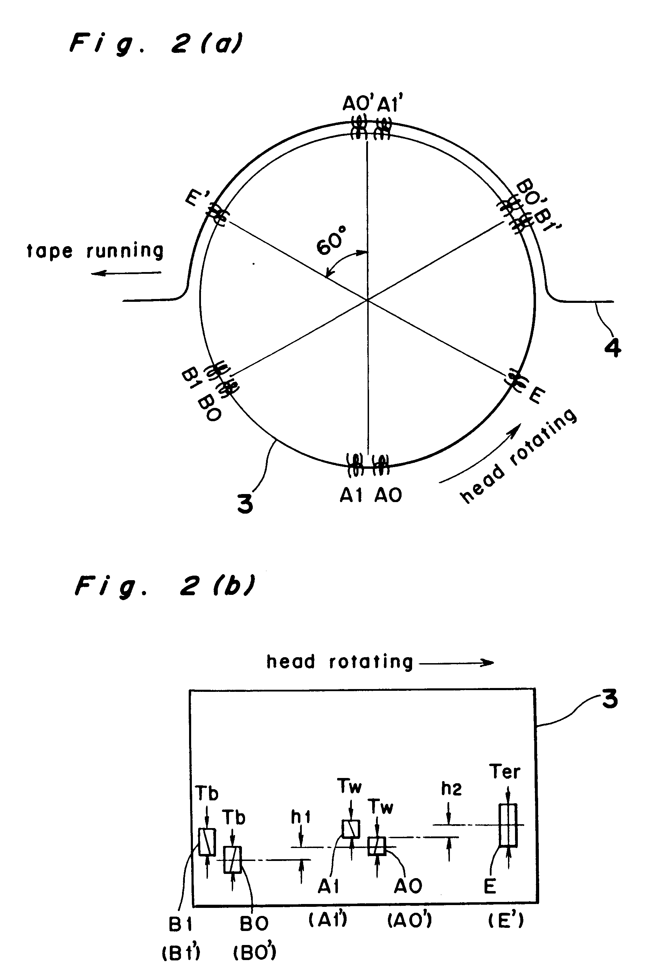

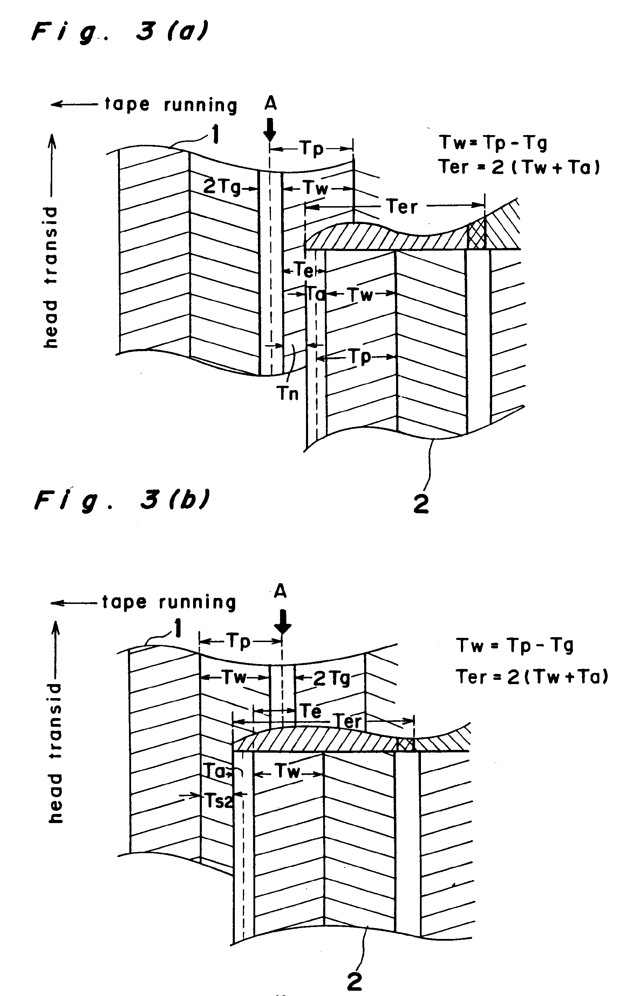

Fig. 2 (a) is a plane view of a rotary cylinder 3 showing the arrangement of the respective magnetic heads and the tape winding condition. Fig. 2 (b) is a front face view showing the mounting height of each head. Fig. 3 (a) shows a pattern in a condition where the recording head is shifted to the right by Te at the editing operation, and Fig. 3 (b) shows a pattern likewise in a condition where the recording head is shifted to the left by Te.

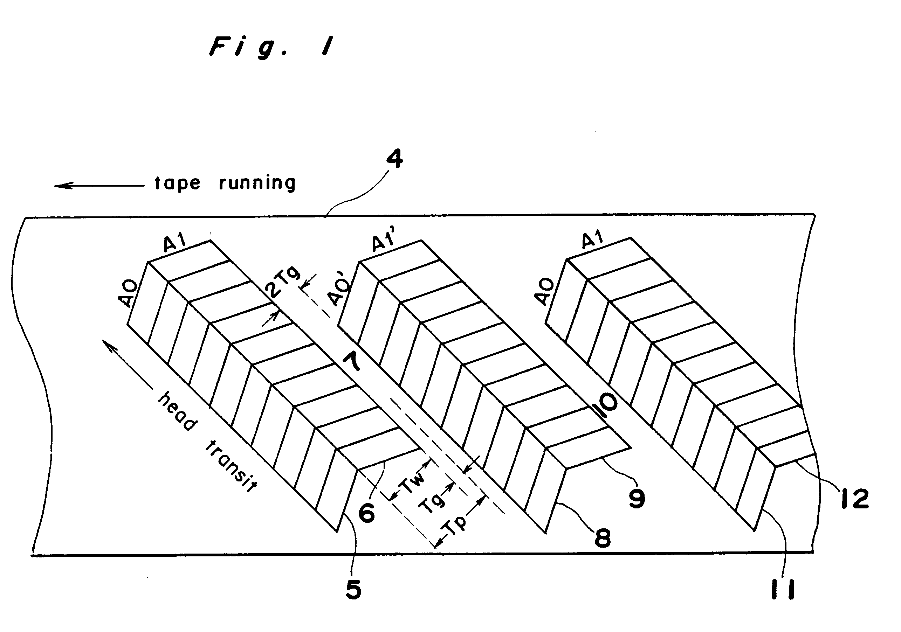

As shown in Fig. 2, an erasing head E (E′), recording heads A0, A1 (A0′, A1′), reproducing heads B0, B1 (B0′, B1′) are mounted at the interval of 60 degrees on the rotary cylinder 3. The recording heads A0 and A1 (A0′ and A1′) and the reproducing heads B0 and B1 (B0′ and B1′) constitute a pair of heads. The pair of recording heads A0 and A1 (A0′ and A1′) are mounted in a condition where there is not a gap in the width direction as shown in Fig. 2 (b) so that there is no guard band between them on the recording pattern, and the track width becomes Tw. The signals are recorded on the tape 4 by the pair of recording heads A0, A1, (A0′, A1′) in accordance with the rotation of the cylinder 3 so that such recording track patterns as shown in Fig. 1 are formed. In Fig. 1, track patterns 5, 6, 11, 12 are recorded by the pair of recording heads A0, A1. Track patterns 8, 9 are recorded by the pair of recording heads A0′, A1′ with the guard bands 7, 10 being provided. As shown in Fig. 1, there are given a recording track width Tw, a track pitch Tp, a guard band width 2Tg. The guard band width 2Tg is determined by the tape speed.

At the reproducing time, the reproducing operation is effected by a pair of reproducing heads B0, B1 (B0′, B1′) having a width Tb (Tb > Tw) greater than the recording track width Tw so that the signals of the the recording tracks may be normally picked up even if the track shift is occured. The height h1 shown in Fig. 2 (b) is a height equivalent to the mounting angle difference of 60 degrees of the pairs of recording heads A0, A1, (A0′, A1′) and reproducing heads B0, B1 (B0′, B1′), so that the center of the reproducing head may ride on the center of the track when the recording head is just on the track. In this manner, the recording may be confirmed through the reproduction by the reproducing head at the same time while the recording is being performed.

Also, the mounting positions of the pair of reproducing heads B0, B1 (B0′, B1′) are provided in positions (in Fig. 2 (b), in the upper positions) preceded by the time equivalent to the record/reproduction processing time of the signals to be recorded on the oblique tracks by the recording pair heads A0, A1 (A0′, A1′), so that the signal recorded on the.oblique track and the signal to be recorded on the linear track may be also set at the timing. The reproducing heads B0, B1 (B0′, B1′) are mounded on a movable element, the position changed at the record simultaneous reproduction time and the reproduction time or the heads for the record simultaneous reproduction use and for the reproduction use are separately provided, so that the simultaneous reproduction and the preceding reproduction may be realized.

Each width Tb of the pair of reproduction heads B0 and B1 (B0′ and B1′) is greater than the recording track width Tw, so that they are mutually overlapped at the central portions of the pair as shown in Fig. 2 (b). The value of the width Tb of each of the reproduction pair heads B0 and B1 will be described later as the optimum value considering the editing.

The track cutting and the interference at the editing point in accordance to the present invention will be described hereinafter with reference to Fig. 3. Fig. 3 shows a condition where the already recorded track 1 is erased from the point A, and the track 2 is recorded. Also, as shown in Fig. 6, what are shown by the oblique lines in the track show the azimuth angles of the respective heads. Fig. 3 (a) shows a condition where the recording head is shifted by Te to the right, and Fig. 3 (b) shows a condition where the recording head is shifted by Te to the left.$\text{Tw = Tp - Tg}$$\text{Ter = 2 (Tw + Ta)}$
wherein the track pitch is Tp, the recording track width is Tw, the guard band half width is Tg, the erasure width is Ter, the difference between the half of the erasure width Ter and the track width Tw is Ta, which is a width with the already recorded track remaining erased at the editing start point. The erasure width Ter is determined by the width Ter of the erasing head E (E′) shown in Fig. 2 (b). The height shown by h2 in Fig. 2 (b) is equivalent to the mounting angle difference of 60 degrees of the erasing head E (E′) and the recording heads A0, A1 (A0′, A1′). The height is set in this manner. The new record track is formed by the recording of heads A0, A1 (A0′, A1′) just at the center of the portion erased by the erasing head E (E′).

In the case of Fig. 3 (a), all the signal components of the recording track width Tw at the editing point are reproduced through the reproduction by the wide reproducing heads B0, B1 (B0′, B1′). The guard band of the Ta width is formed, and the signal from the track of Tn ( = Te Ta ) width shown in the drawing as the interference signal of the same azimuth is mixed. The equivalent effective track width Tsl at this time is as follows as in the case of Fig. 6.$\text{Ts1 = Tw - kTn} \text{= Tp - Tg - k ( Te - Ta )}$
wherein Tn ≧ 0, namely, Te ≧ Ta.

In the case of Fig. 3 (b), the already recorded track immediately before the editing point is cut by Te - 2Tg + Ta. Therefore, the effective width Ts2 of this track is as follows.$\text{Ts2 = Tw - ( Te - 2Tg + Ta )} \text{= Tp + Tg - ( Te + Ta )}$

Since the Te for satisfying the following equation$\text{Ts = Ts1 = Ts2}$
becomes the tolerance track shift amount, wherein the effective track width by which the sufficient value at the error rate is provided is Ts as in the case of Fig. 6. From the equations (7), (8), (9), the following equation is provided.$\text{Te = { 2 / ( k + 1 ) } ( Tp - Ts )} \text{+ { ( k - 1 ) / ( k + 1 ) } Ta}$

Upon comparison between the equation (4) and the equation (10), the equation 1 / k < 2 / ( k + 1 ) is provided, because k is greater than 1. The right side of the equation (4) is smaller than a first term of the right side in the equation (10). Also, a second term of the right side in the equation (10) is positive. Therefore, the tolerance track shift amount Te of the equation (10) becomes greater than the tolerance track shift amount Te of the equation (4). Namely, in accordance with the present invention, the tolerance track shift may be made greater than that of the embodiment of Fig. 6. This means that the track pitch may be made narrower by the present invention if the tolerance track shift is made the same. From the guard band half width Tg with respect to the tolerance track shift amount Te for satisfying the equation (10), and the equations (5), (6), the track width Tw, the erasing width Ter are as follows.$\text{Tg = { 2k / ( k + 1 ) } Ta - { ( k - 1 ) / ( k + 1 ) } ( Tp - Ts )}$$\text{Tw = { 2k / ( k + 1 ) } ( Tp - Ta ) - { ( k - 1 ) / ( k + 1 ) } Ts}$$\text{Ter = 2 { 2kTp - ( k - 1 ) ( Ta + Ts ) } / ( k + 1 )}$

Also, as shown in Fig. 3, the reproducing head width Tb is set to pick up all the effective signals by the reproduction in a condition where the tracking has been effected on the already recorded track even if the track to be newly recorded is shifted to the right or to the left at the editing point. Therefore, the reproducing head width Tb is as follows.$\text{Tb = Tw + 2Te} \text{= { ( 4 + 2k ) Tp + ( 5 - K ) Ts} \text{- 2Ta } / ( k + 1 )}$

As described hereinabove, in the digital VTR, the track width is determined by the relation with respect to the error rate. The sufficient error rate may be provided by the effective track width of approximately 8 »m in a case where in the digital VTR for recording with the pair heads composed of two channels arranged mutually by 180 degrees as in the present invention, the cylinder diameter is made approximately 76 mm, the rotary speed is made 5400 rpm which is three times the normal analog VTR, one field is adapted to be recorded with 6 tracks. This means that the effective track width Ts equals 8 »m.

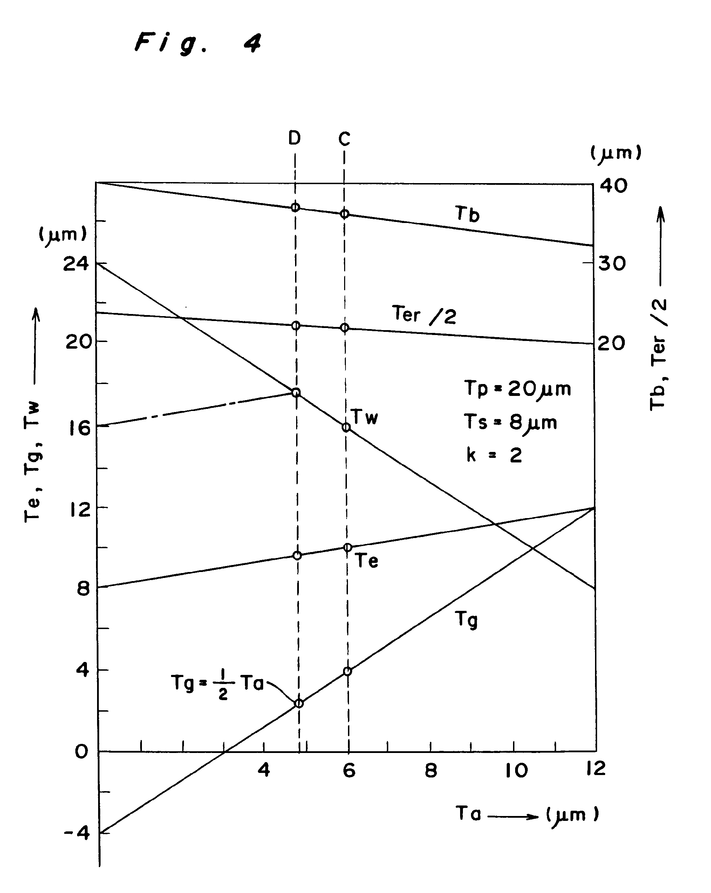

Fig. 4 shows the relation among Ta, Te, Tg, Tw, Tb, Ter in Tp = 20 »m, k = 2. According to the equation (4) in a case of the conventional apparatus (Fig. 6), Te equals 6 »m under the above-described conditions. On the other hand, in Fig. 4 in accordance with the present invention, Te becomes 12 »m from 8 »m when Ta is changed into 12 »m from 0. As one example, in the Ta = 6 »m shown in the broken line of Fig. 4, Te equals 10 »m, Tg equals 4 »m, Tw equals 16 »m, Tb equals 36 »n, Ter equals 44 »m. As compared with the conventional case of Fig. 6, the tolerance with respect to the track shift may be exceptionally increased. Also, in order to obtain the track shift tolerance value of 10 »m in the conventional embodiment of Fig. 6, the track pitch Tp equals 28 »m from the equation (4), the tape is consumed 1.4 times as compared with the case of the present invention.

In Fig. 4, the point shown by the broken line D is a point where the guard band half width Tg equals (1 / 2) Ta. By setting the values on the line D, erase is performed till the guard band of the already recorded track when the track shift is not occurred. At this time, Ta equals 4.8 »m, Tg equals 2.4 »m, Te equals 9.6 »m, Tw equals 17.6 »m, Tb equals 36.8 »m, Ter equals 44.8 »m. On the left hand side from the broken line D, the erasure width Ter becomes wider than 2(Tg + Tw) so as to erase one portion (the tracks of the recording heads A1, A1′) of the track recorded at the editing recording time. The width Tw′ of the remaining track width of the recording heads A1, A1′ is expressed by$\text{Tw′ = Tp + Tg - Ta}$
and is shown with a one-dot chain line in Fig. 4. In the range of Tg ≦ 0 (Ta ≦ 3 »m), the track width Tw is as much as the track pitch Tp or larger than the track pitch Tp, the track width of the recording heads A1, A1′ is shown with one-dot chain lines as described hereinabove. Even in this case, when the recording is effected while the erasure is performed, the tracks of the recording heads A1, A1′ is partially erased, and a recording pattern which has guard bands is formed.

In Fig. 4, when the erasing operation by the erasing head E ( E′ ), if it is on the left from the break line D, is effected preceding by one pair of tracks or more, not immediately before the recording by the recording heads A0, A1 ( A0′, A1′ ), the guard bands of a width of at least Ta are formed only at the editing starting point and the completing point without the partial erasure of the track recorded at the editing time. Thus, except for the editing point, the pattern of the track width Tw is formed (while Tg ≧ 0). Especially in Tg ≦ 0, the guard bands are formed only at the editing points (editing starting point and completing point). If it is performed in this manner, the operation in the editing point is completely the same as that in the above-described description, ensuring the stability.

In addition to the above-described method of forming the guard band only at the editing point, there is a method of effecting the operation only at the editing starting point and the completing point although the erasing operation is performed immediately before the recording operation in addition to the above-described method, and further, there is a method of erasing only the place to become the guard band, with the width of the erasing head being Ta. The operation at the editing point is the same in any case.

In the head arrangement view of Fig. 2 (b), the width of the recording head A0 ( A0′ ) is made upwardly wider so that an overlapping may be provided between the heads of the pair although the boundary line between the recording heads A0 ( A0′ ) and A1 ( A1′ ) is made the same in height. In this case, the large width portion of the track to be previously recorded by the recording head A0 ( A0′ ) within the tracks of the pair is erased by the recording through the succeeding recording head A1 ( A1′ ), so that the recording pattern shown in Fig. 1 may be formed all the same. In this manner, the accuracy of the head width may be loosened, and the yield may be improved.

Although in the above-described description, the width of each head has been described as the optimum value for maximizing the track shift tolerance value, an object of increasing the tolerance with respect to the track shift as compared with the conventional system so as to make the density higher.

The construction of the set heads is not limited to two as described hereinabove. It is clear that the ratio of the guard bands is reduced and the density may be made higher as the construction is made with more heads.

Also, in accordance with the editing of the present invention, when the new signal is recorded after the already recorded track has been erased, the old signal is completely erased, with an advantage even at the point of the error rate as compared with a thing being overwritten (the old signal remains without being completely erased ) as in the system of Fig. 6. This is because the effective signal becomes larger if the track width remains the same, and further the track shift tolerance value has been increased.

Since the present invention does not have the guard band provided between the heads, the density may be made higher as compared with the guard bands formed between all the tracks as in the conventional analog VTR.

## Claims

1. An apparatus for recording signals through forming oblique tracks on a recording medium (4) with at least one rotating set of a plurality of simultaneously scanning recording heads (19; A0, A1; A0′, A1′) which each are adapted to have different azimuth angles among the adjacent tracks (5, 6; 8, 9; 11, 12; ...) formed by each of the heads (19; A0, A1; A0′, A1′) of said set, the heads of the set being arranged such that guard bands are not formed among the respective tracks (5 and 6, 8 and 9, 11 and 12, ...) formed by the recording heads (19; A0, A1; A0′, A1′) of said set,
characterized by erasing means (21; E, E′) for providing guard bands (Tₛ) in editing points (A) between a set of tracks to be recorded newly by the set of recording heads (19; A0, A1; A0′, A1′) and an already recorded set of tracks.

2. An apparatus in accordance with claim 1,
characterized by at least one rotating erase head (21; E, E′) rotating simultaneously with set of recording heads (19; A0, A1, A0′, A1′) and being arranged with respect to said set of recording heads (19; A0, A1, A0′, A1′), such that at least during editing portions of the already recorded tracks larger in width than the set tracks to be formed by the set of recording heads (19; A0, A1, A0′, A1′) become erased and guard bands (7, 10) are provided in the editing points (A) between a set of tracks to be recorded newly by the set of recording heads (19; A0, A1, A0′, A1′) and an already recorded set of tracks left unerased by said erase head (21; E, E′).

3. An apparatus in accordance with claim 1 or 2,
characterized by at least one rotating set of a plurality of simultaneously reproducing heads (22; B0, B1, B0′, B1′) having a witdh larger than the recorded tracks (1, 2) for effecting a reproducing operation.

4. An apparatus in accordance with claim 2 or 3,
characterized in that said erase head (21; E, E′) is arranged with respect to said set of recording heads (19; A0, A1, A0′, A1′) such that at the editing time, the already recorded set of tracks at least immediately before the set tracks to be newly recorded with the recording set heads are erased at the edition starting point and completing point.

5. An apparatus in accordance with anyone of claims 2 to 4,
characterized in that said erase head (21; E, E′) is arranged with respect to said set of recording heads (19; A0, A1, A0′, A1′) such that at the editing time, the already recorded set of tracks are erased, preceding by one pair of tracks or more with the newly recording by said set of recording heads (19; A0, A1, A0′, A1′).

## Patentansprüche

1. Vorrichtung zum Aufzeichnen von Signalen durch Bilden schräger Spuren auf einem Aufzeichnungsmedium (4), mit wenigstens einem rotierenden Satz von mehreren gleichzeitig abtastenden Aufzeichnungsköpfen (19; A0, A1; A0′, A1′), welche so ausgebildet sind, daß sie unterschiedliche Azimutwinkel zwischen den durch jeden der Köpfe (19; A0, A1, A0′, A1′) des Satzes gebildeten benachbarten Spuren (5, 6; 8, 9; 11, 12; ...) aufweisen, wobei die Köpfe des Satzes derart angeordnet sind, daß zwischen den entsprechenden, durch die Aufzeichnungsköpfe (19; A0, A1; A0′, A1′) des Satzes gebildeten Spuren (5 und 6, 8 und 9, 11 und 12, ...) Sicherheitsstreifen nicht gebildet werden,
gekennzeichnet durch Löscheinrichtungen (21; E, E′) zum Vorsehen von Sicherheitsstreifen (Tₛ) in Überschreibpositionen (A) zwischen einem Satz von Spuren, welche durch den Satz von Aufzeichnungsköpfen (19; A0, A1; A0′, A1′) neu aufzuzeichnen sind, und einem bereits aufgezeichnetem Satz von Spuren.

2. Vorrichtung nach Anspruch 1,
gekennzeichnet durch wenigstens einen rotierenden Löschkopf (21; E, E′), der gleichzeitig mit dem Satz Aufzeichnungsköpfe (19; A0, A1, A0′, A1′) rotiert und, bezogen auf den Satz Aufzeichnungsköpfe (19; A0, A1, A0′, A1′), so angeordnet ist, daß wenigstens entlang von Überschreibabschnitten bereits aufgezeichneter Spuren, welche breiter sind als der durch den Satz Aufzeichnungsköpfe (19; A0, A1, A0′, A1′) gebildete Spurensatz, gelöscht wird und Sicherheitsstreifen (7, 10) an den Überschreibpositionen (A) zwischen den durch den Satz Aufzeichnungsköpfe (19; A0, A1, A0′, A1′) neu aufzuzeichnenden Spursätzen vorgesehen sind und ein bereits aufgezeichneter Spurensatz durch den Löschkopf (21; E, E′) ungelöscht bleibt.

3. Vorrichtung nach Anspruch 1 oder 2,
gekennzeichnet durch wenigstens einen rotierenden Satz einer Mehrzahl gleichzeitig wiedergebender Köpfe (22; B0, B1, B0′, B1′) mit einer größeren Breite als die der aufgezeichneten Spuren (1, 2) zum Ausführen eines Wiedergabebetriebes.

4. Vorrichtung nach Anspruch 2 oder 3,
dadurch gekennzeichnet, daß der Löschkopf (21; E, E′), bezogen auf den Satz Aufzeichnungsköpfe (19; A0, A1, A0′, A1′), derart angeordnet ist, daß die bereits aufgezeichneten Spurensätze wenigstens unmittelbar vor dem durch den Satz Aufzeichnungsköpfe neu aufzuzeichnenden Spurensatz zur Überschreibzeit am ÜberschreibAnfangspunkt und -Endpunkt gelöscht werden.

5. Vorrichtung nach einem der Ansprüche 2 bis 4,
dadurch gekennzeichnet, daß der Löschkopf (21; E, E′), bezogen auf den Satz Aufzeichnungsköpfe (19; A0, A1, A0′, A1′), derart angeordnet ist, daß die bereits aufgezeichneten Spurensätze während der Überschreibzeit mit einem Vorsprung von zwei oder mehr Spuren vor den durch den Satz Aufzeichnungsköpfe (19; A0, A1, A0′, A1′) aufzuzeichnenden gelöscht werden.

## Revendications

1. Appareil pour enregistrer des signaux au moyen de la formation de pistes obliques sur un support d'enregistrement (4) avec au moins un ensemble rotatif d'une multitude de têtes d'enregistrement effectuant un balayage simultané (19 ; A0, A1 ; A0′, A1′) qui sont chacune adaptées pour présenter des angles azimutaux différents parmi les pistes contiguës (5, 6 ; 8, 9 ; 11, 12 ; ...) formées par chacune des têtes (19 ; A0, A1 ; A0′, A1′) dudit ensemble, les têtes de l'ensemble étant disposées de telle façon que des bandes de sécurité ne soient pas formées parmi les pistes respectives (5 et 6, 8 et 9, 11 et 12, ...) formées par les têtes d'enregistrement (19; A0, A1 ; A0′, A1′) dudit ensemble, caractérisé par des moyens d'effacement (21 ; E, E′) pour procurer des bandes de sécurité (Tg) aux points d'édition (A) entre un ensemble de pistes à enregistrer à nouveau au moyen de l'ensemble des têtes d'enregistrement (19 ; A0, A1 ; A0′, A1′) et un ensemble de pistes déjà enregistrées.

2. Appareil selon la revendication 1, caractérisé par au moins une tête d'effacement rotative (21 ; E, E′) tournant simultanément avec l'ensemble de têtes d'enregistrement (19 ; A0, A1, A0′, A1′) et disposée par rapport audit ensemble de têtes d'enregistrement (19 ; A0, A1, A0′, A1′), d'une manière telle que, au moins pendant l'édition, des parties de pistes déjà enregistrées plus grandes en largeur que l'ensemble de pistes qui doit être formé par l'ensemble de têtes d'enregistrement (19 ; A0, A1, A0′, A1′) soient effacées et dans lequel des bandes de sécurité (7, 10) sont prévues aux points d'édition (A) entre un ensemble de pistes à enregistrer à nouveau par l'ensemble de têtes d'enregistrement (19 ; A0, A1, A0′, A1′) et un ensemble de pistes déjà enregistrées laissées non effacées par ladite tête d'effacement (21 ; E, E′).

3. Appareil selon la revendication 1 ou la revendication 2, caractérisé par au moins un ensemble rotatif d'une multitude de têtes de reproduction de façon simultanée (22 ; B0, B1, B0′, B1′) présentant une largeur plus grande que les pistes enregistrées (1, 2) pour effectuer une opération de reproduction.

4. Appareil selon la revendication 2 ou la revendication 3, caractérisé en ce que ladite tête d'effacement (21 ; E, E′) est agencée en fonction dudit ensemble de têtes d'enregistrement (19 ; A0, A1, A0′, A1′) d'une manière telle qu'à l'instant de l'édition, l'ensemble des pistes déjà enregistré au moins immédiatement avant l'ensemble de pistes qui doivent être à nouveau enregistrées par l'ensemble de têtes d'enregistrement soit effacé au point de début d'édition et au point de terminaison d'édition.

5. Appareil selon l'une quelconque des revendications 2 à 4, caractérisé en ce que ladite tête d'effacement (21 ; E, E′) est agencée en fonction dudit ensemble de têtes d'enregistrement (19 ; A0, A1, A0′, A1′) d'une façon telle qu'à l'instant de l'édition, l'ensemble des pistes déjà enregistré soit effacé, en précédant d'une paire de pistes ou plus le nouvel enregistrement par ledit ensemble de têtes d'enregistrement (19 ; A0, A1, A0′, A1′).
